# FASCICULE DE BREVET EUROPEEN

(11) **EP 2 220 422 B1**
(45) Date de publication et mention de la délivrance du brevet: **28.08.2013**
(21) Numéro de dépôt: 08848583.4
(22) Date de dépôt: 13.11.2008
(51) Int. Cl.: F17C 1/06, F17C 1/16, B29C 53/00, B29C 70/00

(54) **RÉSERVOIR DE FLUIDE SOUS PRESSION, MÉTHODE ET APPAREIL POUR LA FABRICATION D'UN TEL RÉSERVOIR**
TANK FÜR DRUCKBEAUFSCHLAGTES FLUID UND VORRICHTUNG ZUR HERSTELLUNG SOLCH EINES TANKS
PRESSURISED FLUID TANK AND METHOD AND APPARATUS FOR PRODUCING ONE SUCH TANK

(30) Priorité: 13.11.2007 FR 0759003
(43) Date de publication de la demande: 25.08.2010
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: BLANC, Claude, CH-1694 Villarsiviriaux (CH); ESSINGER, Olivier, CH-1714 La Tour De Peilz (CH); STACCHI, Cesare, CH-6526 Prosito (CH)
(74) Mandataire: Lasson, Cédric Y. M.
(86) Numéro de dépôt international: PCT/EP2008/065497
(87) Numéro de publication internationale: WO 2009/063019

(56) Documents cités:
- EP-A- 1 526 324
- EP-A- 1 593 904
- EP-A- 1 762 773
- WO-A-2006/132394
- DE-A1- 10 243 164
- DE-A1-102006 004 121
- DE-U1- 20 107 628
- FR-A- 2 772 459
- GB-A- 1 150 131
- US-A- 5 758 796
- US-A1- 2003 111 473
- US-A1- 2004 026 431
- US-A1- 2004 206 762
- US-A1- 2006 096 993

## Description

La présente invention se rapporte au stockage des fluides sous pression. Elle est notamment mais pas uniquement applicable pour le stockage d'hydrogène gazeux dans un véhicule routier, par exemple un véhicule à pile à combustible. Un réservoir pour le stockage de gaz sous pression est connu du document US 7758796.

Dans ce domaine, l'une des difficultés en vue de la production en série de tels véhicules est la conception des réservoirs. En effet, les réservoirs d'hydrogène emportés par ces véhicules sont soumis à des pressions d'usage pouvant aller jusqu'à 700 bar et doivent répondre à d'importantes exigences de sécurité afin de limiter au maximum les conséquences d'un choc, d'un impact accidentel ou d'un incendie. Par exemple, lorsque le réservoir est endommagé au cours d'un accident dans lequel est impliqué le véhicule ou lorsqu'un projectile tiré par une arme à feu traverse le réservoir, il est souhaitable que le réservoir libère sa pression progressivement, sans exploser ni se déchirer de manière importante. Il en est de même en cas d'augmentation de la température du gaz contenu dans le réservoir du fait d'un incendie du véhicule.

Un autre objectif est de permettre une obtention industrielle de tels réservoirs pour un coût raisonnable, par exemple acceptable pour une application automobile.

L'invention propose pour cela un réservoir pour le stockage de fluide sous haute pression de forme générale cylindrique et de section ronde tel que défini par la revendication 1.

De préférence, chaque embout comporte en outre un joint élastomérique disposé dans une gorge annulaire de la partie non cylindrique de la surface extérieure dudit embout, la pression interne du réservoir ayant tendance à serrer l'embout contre le liner en comprimant le joint. De préférence, le joint est un joint torique.

De préférence, la couche structurelle est une couche de fibre de carbone. De préférence encore, le réservoir comprend en outre une couche extérieure de protection en fibre de verre enveloppant la couche structurelle.

De préférence, la couche structurelle, et le cas échant la couche de protection, est (sont) constituée(e) à partir d'un ruban de fibres enroulé autour du liner.

De préférence, le liner est en polyamide d'une épaisseur inférieure ou égale à 3 mm, de préférence encore inférieure à 1.5 mm.

De préférence, pour chaque extrémité, une virole extérieure à la couche structurelle et solidaire de l'embout le maintient axialement en place.

De préférence, pour chaque extrémité, une bague de frettage maintient chaque extrémité du liner radialement serrée sur l'embout.

De préférence, le diamètre extérieur des embouts correspond sensiblement au diamètre intérieur du réservoir.

L'invention concerne également une méthode de fabrication d'un réservoir de forme générale cylindrique de section ronde pour le stockage de fluide sous haute pression, le réservoir comprenant autour d'un axe un liner et une couche structurelle, ladite méthode comprenant des étapes consistant successivement à :
- placer des embouts métalliques à l'intérieur d'un tube destiné à former le liner,
- conformer les extrémités du tube à la forme des embouts en réduisant localement le diamètre du tube,
- enrouler au moins un ruban de fibre imprégnée de résine thermodurcissable autour du liner pour former la couche structurelle du réservoir.

De préférence, la méthode comprend en outre une étape consistant à placer des joints élastomériques dans des gorges annulaires de la surface radialement extérieure des embouts en regard du tube destiné à former le liner.

De préférence, la méthode comprend en outre une étape consistant à placer une bague de frettage autour des extrémités du tube conformées sur les embouts.

De préférence, la méthode comprend en outre une étape consistant à enrouler un deuxième ruban de fibre imprégnée de résine thermodurcissable autour de la couche structurelle pour former une couche extérieure de protection du réservoir. De préférence, le deuxième ruban de fibres est abouté au premier ruban de fibres.

De préférence, une pression interne est maintenue dans le volume de l'ébauche constituée du liner et des embouts pendant l'enroulement du ruban.

De préférence, une traction axiale est maintenue sur l'ébauche constituée du liner et des embouts pendant l'enroulement du ruban.

De préférence, on enroule simultanément deux rubans de manière sensiblement symétrique par rapport à l'axe de l'ébauche constituée du liner et des embouts.

De préférence, pour réaliser l'enroulement, on entraîne l'ébauche constituée du liner et des embouts en rotation autour de son axe, l'ébauche étant tenue par les embouts, les rubans étant guidés par un moyen mobile parallèlement à l'axe de l'ébauche.

De préférence, l'axe de l'ébauche est maintenu sensiblement horizontal pendant l'enroulement.

Un autre aspect ne faisant pas partie de l'invention concerne un appareil pour l'enroulement d'un ruban de fibres autour d'une ébauche de forme générale cylindrique de section ronde comprenant:
- un support rotatif apte à maintenir l'ébauche par ses extrémités,
- des moyens d'entraînement du support rotatif en rotation autour de l'axe de l'ébauche,
- un dispositif d'alimentation en ruban de fibre imprégné de résine,
- des moyens pour déplacer le dispositif d'alimentation parallèlement à l'axe de l'ébauche.

De préférence, le dispositif d'alimentation en ruban de fibre comprend un dispositif d'imprégnation du ruban en résine liquide.

De préférence encore, le dispositif d'imprégnation utilise au moins une cascade de résine liquide agencée de manière à ce que le ruban la traverse.

De préférence encore, le dispositif d'imprégnation utilise plusieurs cascades agencées de manière à ce que le ruban les traverse successivement.

De préférence, le ruban débouche du dispositif d'imprégnation par un oeillet permettant de guider le ruban pour l'enroulement autour de l'ébauche.

De préférence, le support rotatif permet d'exercer une tension axiale dans l'ébauche.

De préférence, le support rotatif permet de maintenir une pression de gaz à l'intérieur de l'ébauche.

De préférence, l'appareil comprend en outre un deuxième dispositif d'alimentation en ruban de fibre. De préférence encore, le deuxième dispositif d'alimentation en ruban est disposé de manière symétrique au premier dispositif d'alimentation par rapport à l'axe de l'ébauche.

D'autres caractéristiques et avantages de l'invention apparaîtront grâce à la description de modes préférés de réalisation. Les figures représentent respectivement:
- Figure 1 : vue en coupe partielle d'un réservoir selon l'invention ;
- Figure 2 : vue en perspective du tube destiné à constituer le liner du réservoir de la figure 1;
- Figures 3 à 8 : vues montrant successivement différents stades de fabrication du réservoir selon la méthode de l'invention ;
- Figure 9 : vue générale d'un appareil pour la fabrication d'un réservoir selon la méthode de l'invention ;
- Figure 10 : vue de détail de l'appareil de la figure 9 montrant en particulier les moyens d'imprégnation du ruban.

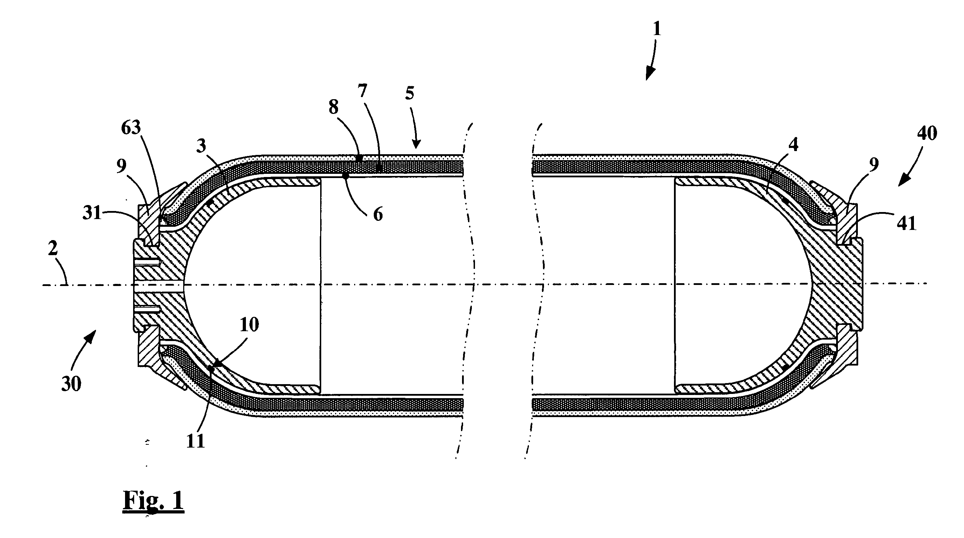

En référence à la figure 1, on voit en coupe un réservoir 1 de forme générale cylindrique de section ronde selon un axe 2. La figure 1 représente une interruption au centre du réservoir car la longueur peut être très grande par rapport au diamètre, par exemple 10, 20 ou 30 fois plus grande. Chaque extrémité du réservoir comporte un embout, de préférence métallique, par exemple en alliage d'aluminium. Le premier embout 3 constitue une interface d'entrée/sortie 30 du réservoir et le deuxième embout 4 constitue le fond 40 du réservoir. Le fond 4 peut naturellement comporter également une interface entrée/sortie. Une paroi composite 5 s'étend axialement d'un embout à l'autre. La paroi comprend une couche intérieure d'étanchéité (généralement appelée « liner ») 6, par exemple en polyamide, et une couche structurelle en fibres saturées de résine. Le liner 6 est très peu épais, de préférence d'une épaisseur inférieur ou égale à 3 mm, par exemple égale à 1 mm. La couche structurelle est composée ici d'une couche de fibres de carbone 7. Dans ce cas, une couche extérieure de protection 8 en fibres de verre protège la couche structurelle de carbone. Les couches de carbone et de verre sont saturées de résine, par exemple de résine époxyde. Bien sûr, d'autres types de fibres comme par exemple les fibres aramides peuvent être utilisées en lieu et place de l'une ou l'autre des fibres précitées selon les performances, la masse et les coûts visés.

Un joint élastomérique 11, par exemple torique, placé dans une gorge annulaire 10 de la surface radialement extérieure de chaque embout, assure l'étanchéité entre les embouts.. 3, 4 et le liner 6. La surface d'appui de l'embout sur le liner au niveau du joint n'est pas cylindrique. Elle est ici inclinée par rapport à l'axe du réservoir d'environ 45°. On comprend que la pression interne du réservoir a donc tendance à serrer le liner contre le joint puisqu'elle presse les embouts axialement vers l'extérieur. Plus précisément, la pression interne agit sur la partie centrale de l'embout, radialement jusqu'au joint 11 à l'encontre de la pression atmosphérique extérieure. Pour la partie périphérique de l'embout (radialement au delà du joint), la pression interne agit sur les deux faces de l'embout et ne génère donc aucun effort directement sur cette partie périphérique.

Un effet de cette disposition du joint dans une partie non cylindrique de l'embout est que l'effort axial généré par la pression tend à maintenir la gorge annulaire 10 fermée et donc à empêcher que le joint torique ne soit extrudé. Cet effet est obtenu dès que l'inclinaison de la surface d'appui par rapport à l'axe du réservoir est significative. A l'extrême, une inclinaison à 90°, c'est à dire une configuration dans laquelle les embouts seraient plats au niveau du joint, générerait un effet maximal de ce point de vue.

La forme en entonnoir des embouts 3 et 4 représentés ici est une forme préférée car elle permet aux embouts, comme décrit plus haut, de prendre appui directement contre la face interne de la paroi composite et de réaliser une excellente étanchéité avec cette face interne, c'est à dire avec le liner. Comme représenté ici, la forme des embouts dans leur zone de transition (c'est à dire ici de part et d'autre du joint) est en outre de préférence sensiblement hémisphérique afin de répartir au mieux les contraintes subies par les embouts et par la paroi composite.

Comme représenté sur les figures, les embouts s'étendent axialement de préférence jusqu'à la partie cylindrique du réservoir. Ainsi, le diamètre extérieur des embouts correspond sensiblement au diamètre intérieur du réservoir.

Alternativement au mode de réalisation représenté, le liner peut être adhérisé ou moulé au métal de l'embout, ce qui permet de supprimer le joint et la gorge correspondante. Dans cette hypothèse, des embouts non-métalliques, par exemple en polyamide pourraient également être intéressants.

De préférence, des viroles 9, tenues dans des gorges (respectivement 31 et 41) des premier, et deuxième embouts, permettent de maintenir axialement les embouts en position lorsqu'il n'y a pas de pression interne ou que la pression est insuffisante pour éviter un déplacement de l'embout en cas de choc axial par exemple. Les viroles (ou à tout le moins l'une d'entre elles) peuvent également servir à fixer le réservoir au véhicule et/ou au circuit qu'il alimente.

La longueur et le diamètre du réservoir peuvent être plus ou moins grands, en particulier selon l'espace disponible dans le véhicule auquel il est destiné.

Un avantage du liner en polyamide (ou en tout autre matériau compatible) fondant avant d'atteindre des températures trop hautes est que l'on bénéficie d'une sécurité intrinsèque en cas d'incendie. Soumis aux flammes, le réservoir selon l'invention finit par libérer de lui-même le gaz, sans provoquer d'explosion.

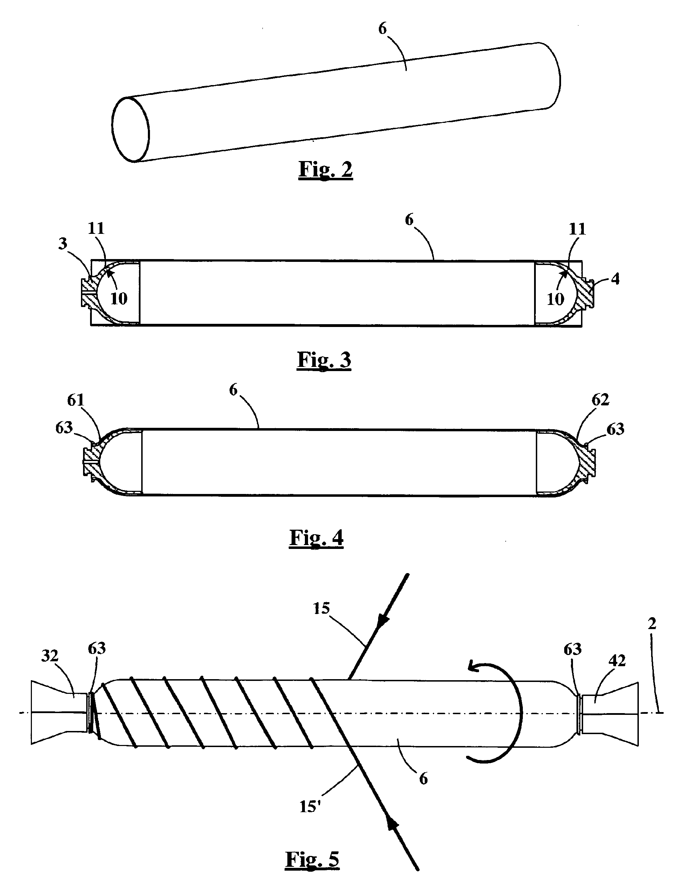

Les figures 2 à 8 illustrent les étapes successives essentielles de la méthode de fabrication selon l'invention.

A la figure 2, on voit un tube de section circulaire coupé à longueur et destiné à former le liner 6 du réservoir. Il est constitué d'un matériau étanche, inerte en présence d'hydrogène sous pression et compatible avec les autres constituants de la paroi composite. Le polyamide 6 (PA6) convient bien pour cet usage.

A la figure 3, on voit comment sont ensuite placés les embouts 3 et 4 à l'intérieur des extrémités du tube de polyamide. De préférence, le diamètre extérieur des embouts correspond sensiblement au diamètre intérieur du tube, c'est à dire au diamètre intérieur du réservoir. Le cas échéant, les joints toriques 11 sont placés dans les gorges annulaires correspondantes 10 des embouts.

A la figure 4, les extrémités du tube 61 et 62 sont conformées sur les embouts. Ce résultat peut être obtenu par fluotournage, par conformation à froid ou à chaud ou tout autre procédé applicable en fonction en particulier de l'épaisseur choisie pour le liner. Dans la présente demande, on appelle « ébauche » l'objet de la figure 4 constitué du liner 6 et des embouts 3 et 4.

Selon un mode de réalisation préféré de l'invention, on place alors une bague de frettage 63 autour du liner conformé afin d'une part de garantir la position de son bord et d'autre part de favoriser la transmission d'effort entre l'embout et le liner pour l'enroulement qui va suivre. Un moletage de la surface correspondante de l'embout favorise encore ces effets du frettage.

A la figure 5, l'ébauche de réservoir est placée dans une machine d'enroulement. Les embouts sont tenus par des mandrins rotatifs 32 et 42. On réalise alors l'enroulement progressif de la couche structurelle et le cas échéant de la couche de protection, c'est à dire ici des couches de fibres de carbone et de verre. On enroule pour cela des rubans 15 et 15' comprenant un grand nombre de fibres parallèles. C'est la rotation des mandrins qui entraîne les rubans, les rubans étant alimentés sous une tension contrôlée. Les rubans sont imprégnés de résine thermodurcissable, par exemple de résine époxyde, avant leur enroulement sur l'ébauche. De préférence, comme décrit plus bas en référence à l'appareil d'enroulement, les rubans sont imprégnés par passage au travers d'une ou plusieurs cascades de résine. Deux rubans sont enroulés simultanément depuis deux orientations diamétralement opposées. Par rapport à un enroulement unique, ceci permet de doubler la productivité et de limiter les déformations de l'ébauche que la tension des rubans a tendance à provoquer. Bien évidemment, si le liner est assez épais ou si la tension dans le ruban est très faible, on peut préférer n'enrouler qu'un seul ruban. Au contraire, on peut choisir d'enrouler simultanément plus de deux rubans, en particulier lorsque le diamètre du réservoir est grand par rapport à la largeur de ruban.

De préférence, l'axe de l'ébauche 2 est maintenu à l'horizontale pendant l'enroulement afin d'assurer une répartition régulière de la résine le long du réservoir.

Une pression de gaz, par exemple d'air, est de préférence maintenue à l'intérieur de l'ébauche pendant l'enroulement. Elle a pour effet d'une part de maintenir les deux embouts en appui axial contre le liner et d'autre part de tendre le liner pour limiter ses déformations locales sous le serrage des rubans et pour limiter son fléchissement en cas de tension inégale des deux rubans. Une pression interne de l'ordre de 1 à 3 bars donne de bons résultats.

De plus, les mandrins 32 et 42 exercent de préférence une traction axiale sur les embouts afin de tendre axialement le liner pour limiter encore son fléchissement potentiel. De préférence, cette traction exercée sur l'ébauche n'est pas une force d'intensité déterminée mais vise plutôt à donner à l'ébauche une longueur précise et reproductible, supérieure de quelques millimètres à sa longueur libre (par exemple 2 à 4 mm d'allongement pour un réservoir de 1600 mm de long).

La pression interne et/ou la traction axiale ont également pour effet bénéfique de favoriser le couple transmissible des embouts au liner (et par suite à la paroi composite) et donc de favoriser la génération de tension dans les rubans 15 et 15'. Ceci peut être particulièrement intéressant dans l'hypothèse de l'absence des bagues de frettage 63.

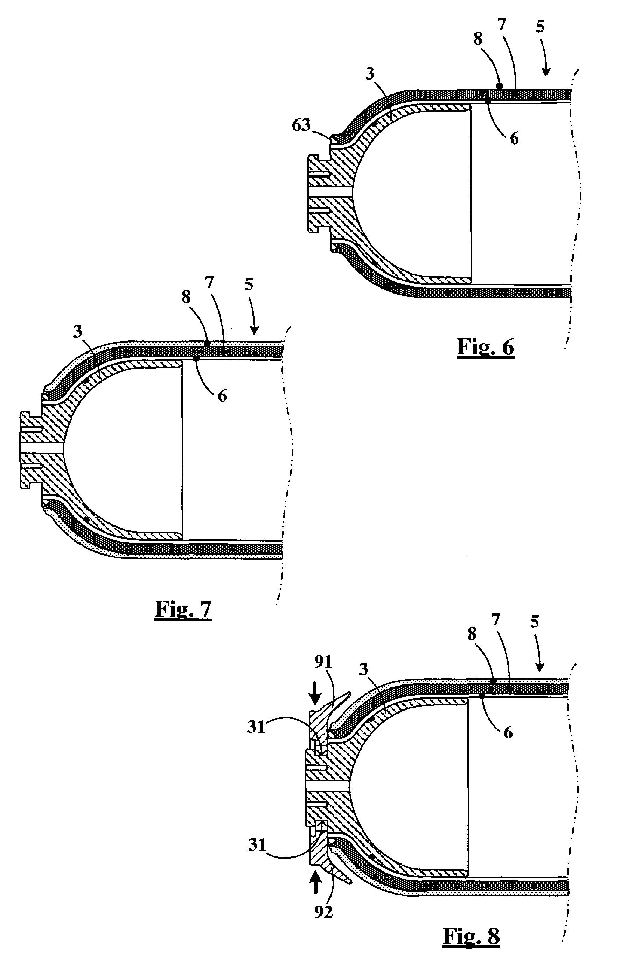

Aux figures 6 à 8, on a représenté en coupe et à plus grande échelle que pour les vues 2 à 5 une extrémité de réservoir à différents stades de sa fabrication.

A la figure 6, l'étape consistant à enrouler la couche structurelle de fibre de carbone 7 sur le liner 6 est terminée.

La figure 7 représente le résultat de l'étape suivante consistant à enrouler la couche extérieure de protection 8 en fibres de verre sur la couche de fibres de carbone 7. La transition entre l'enroulement de carbone et l'enroulement de verre peut se faire de manière très simple par aboutage des rubans de verre sur les rubans de carbone. Comme exposé plus haut, la couche structurelle peut ne pas recevoir de couche de protection.

Le ruban de fibres peut être un ruban disponible dans le commerce en bobines. Différentes largeurs de ruban sont disponibles en fonction du nombre de filaments présents dans le ruban, pour une même qualité de fibre. Le ruban de carbone peut par exemple être un ruban 24K (24000 filaments) d'une densité linéaire de 1600 tex. Sa largeur est d'environ 5 à 6 mm. Le ruban de verre peut être de dimension comparable en 2400 tex.

Une fois la couche structurelle enroulée et le cas échéant la couche de protection, une étape optionnelle peut consister à éliminer l'éventuel surplus de résine liquide par brossage, raclage, essuyage ou tout procédé applicable dans le but de ne conserver que la quantité de résine strictement nécessaire. Au cours de cette étape, les mandrins (32 et 42) continuent d'entraîner le réservoir en rotation.

De préférence, la pression interne et le mouvement de rotation du réservoir sont également maintenus au-delà des étapes décrites ci-dessus et ceci jusqu'à ce que la polymérisation de la résine soit suffisante pour garantir une stabilité dimensionnelle du réservoir.

De préférence, l'axe de l'ébauche 2 est maintenu à l'horizontale pendant le ou les enroulements et jusqu'à la polymérisation suffisant de la résine afin d'assurer une répartition régulière de la résine le long du réservoir.

Une fois atteint le niveau suffisant de polymérisation, la tension axiale et le cas échéant la pression interne peuvent être supprimés et ce réservoir peut en outre subir un étuvage subséquent de quelques heures afin de finaliser la polymérisation de la résine.

A la figure 8, on a représenté l'étape optionnelle au cours de laquelle on place des demi-lunes 91 et 92 dans la gorge 31 prévue à cet effet sur le col de l'embout 3. les demi-lunes 91 et 92 sont alors rendues solidaires entre elles et/ou avec l'embout 3 (par exemple par des vis) pour constituer une virole 9 dont on a décrit l'utilité plus haut en référence à la figure 1.

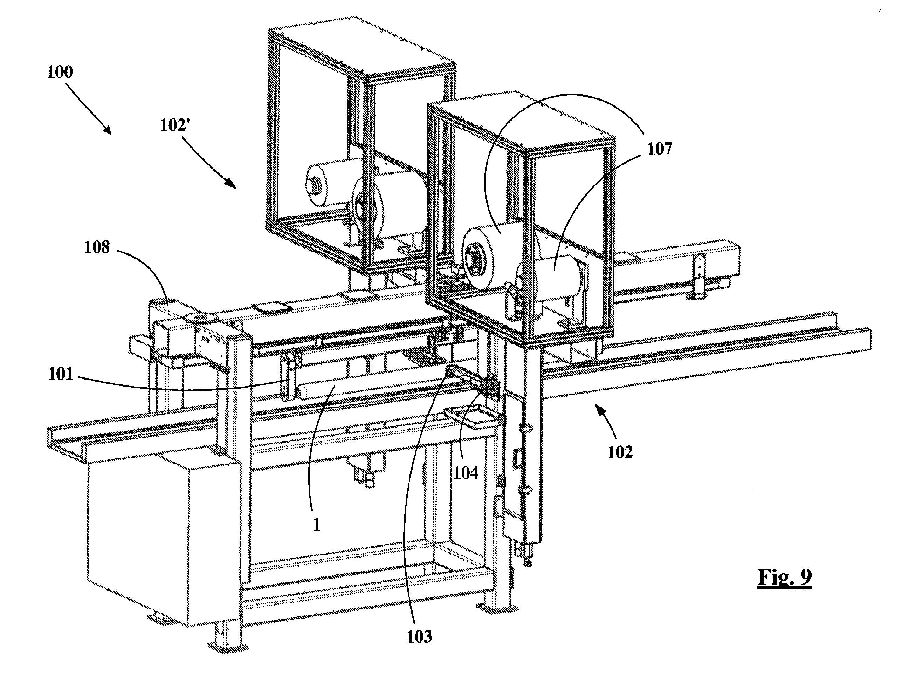

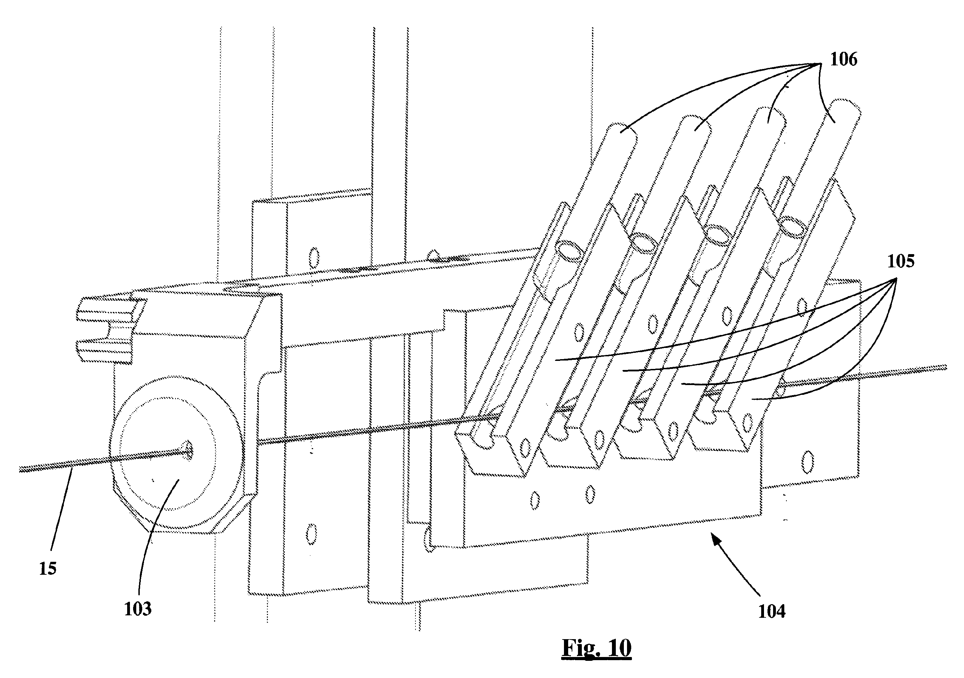

Les figures 9 et 10 sont des vues d'un appareil pour l'enroulement des rubans et la polymérisation (au moins partielle) d'un réservoir selon la méthode de l'invention.

La figure 9 est une vue générale de l'appareil 100. L'ébauche de réservoir 1 est maintenue par ses embouts à l'aide d'un support rotatif 101. Le support comporte des moyens d'entraînement de l'ébauche en rotation autour de son axe maintenu à l'horizontale. De préférence, le support comprend une alimentation en air sous pression reliée par un joint tournant à l'embout (3) de l'ébauche afin de pouvoir maintenir une pression contrôlée dans l'ébauche pendant l'enroulement.

L'appareil comprend un dispositif d'alimentation 102 en ruban sous tension contrôlée. De préférence, la tension est générée de manière connue en soi par l'action d'un contrepoids agissant sur un boucle du ruban, le dévidage des bobines de rubans 107 étant régulé de manière à maintenir le contrepoids actif. Une tension de quelques DaN, par exemple 4 DaN convient bien.

La figure 10 est une vue de détail montrant plus particulièrement la sortie du ruban 15 du dispositif d'alimentation. Cette sortie comprend un oeillet 103 qui guide le ruban pour son enroulement sur l'ébauche. Avant de parvenir à l'oeillet 103, le ruban est imprégné de résine liquide par un dispositif d'imprégnation 104. Le dispositif d'imprégnation peut comprendre une ou comme ici plusieurs cascades 105 alimentées en résine liquide par des conduits 106 et agencées de manière à ce que le ruban les traverse. Le débit de résine apporté aux cascades peut être contrôlé par une pompe volumétrique, par exemple par une pompe péristaltique connue en soi et non représentée ici. Une imprégnation des rubans par cascade évite tout frottement ou flexion des fibres, ce qui a un effet bénéfique quant à leur résistance mécanique. De plus, l'entretien et le nettoyage de l'appareil sont facilités. La résine qui s'écoule des cascades peut être collectée et éventuellement filtrée avant d'être remise à disposition des cascades.

Après leur imprégnation de résine, les rubans n'ont plus que l'oeillet 103 comme point de contact avec l'appareil, ce qui simplifie encore l'entretien de l'appareil.

On comprend que le support rotatif 101 est mobile par rapport au dispositif d'alimentation 102 selon une direction parallèle à l'axe de l'ébauche de réservoir afin de permettre l'enroulement progressif du ruban 15 par des mouvements d'aller et retour coordonnés à la vitesse de rotation du support rotatif 101, c'est à dire à la vitesse de rotation de l'ébauche. Les moyens pour déplacer le support comprennent par exemple un moto-réducteur déplaçant une courroie crantée à laquelle est lié le support. Inversement, le support rotatif pourrait être stationnaire et l'oeillet pourrait alors être mobile axialement, avec ou sans mouvement axial du dispositif d'imprégnation.

De préférence, un deuxième dispositif d'alimentation 102' est disposé en face du premier, de l'autre côté de l'appareil par rapport au support rotatif 101 afin de fournir le deuxième ruban 15' de manière symétrique par rapport au premier ruban 15. Ainsi chaque dispositif d'alimentation fournit indépendamment de l'autre son ruban de fibres imprégnées de résine liquide sous tension contrôlée. Comme décrit plus haut, on peut envisager d'enrouler plus de deux rubans simultanément auquel cas il est préférable de prévoir un nombre correspondant de dispositifs d'alimentation indépendants.

## Revendications

1. Réservoir (1) pour le stockage de fluide sous haute pression de forme générale cylindrique et de section ronde comportant à chacune de ses extrémités le long de son axe (2) un embout métallique d'extrémité (3, 4), un liner (6) enveloppant lesdits embouts, une couche structurelle (7) en fibre imprégnée de résine thermodurcissable enveloppant ledit liner, chaque embout comportant une surface d'appui extérieure venant en appui contre le liner, les embouts s'étendant axialement jusqu'à la partie cylindrique du réservoir, le diamètre extérieur des embouts correspondant sensiblement au diamètre intérieur du réservoir, ledit réservoir étant **caractérisé en ce que** ladite surface d'appui comprend une partie non cylindrique, inclinée par rapport à l'axe du réservoir d'environ 45°, chaque embout comportant en outre un joint élastomérique (11) disposé dans une gorge annulaire (10) de la partie non cylindrique de la surface extérieure dudit embout (3, 4), la pression interne du réservoir ayant tendance à serrer lesdits embouts contre le liner (6) en comprimant le joint (11).

2. Réservoir selon la revendication 1 dans lequel le joint (11) est un joint torique.

3. Réservoir selon l'une des revendications précédentes, la couche structurelle (7) étant une couche de fibre de carbone.

4. Réservoir selon l'une des revendications précédentes, comprenant en outre une couche extérieure de protection (8) en fibre de verre enveloppant la couche structurelle (7).

5. Réservoir selon l'une des revendications précédentes dans lequel la couche structurelle (7), et le cas échant la couche de protection (8), est (sont) constituée(e) à partir d'un ruban de fibres (15) enroulé autour du liner.

6. Réservoir selon l'une des revendications précédentes dans lequel le liner (6) est en polyamide d'une épaisseur inférieure ou égale à 3 mm, de préférence inférieure à 1.5 mm.

7. Réservoir selon l'une des revendications précédentes dans lequel, pour chaque extrémité, une virole (9) extérieure à la couche structurelle (7) et solidaire de l'embout (3, 4) le maintient axialement en place.

8. Réservoir selon l'une des revendications précédentes dans lequel, pour chaque extrémité, une bague de frettage (63) maintient chaque extrémité du liner (6) radialement serrée sur l'embout.

9. Méthode de fabrication d'un réservoir (1) de forme générale cylindrique de section ronde pour le stockage de fluide sous haute pression, le réservoir comprenant autour d'un axe (2) un liner (6) et une couche structurelle (7), ladite méthode comprenant des étapes consistant successivement à :
• placer des embouts métalliques (3, 4) à l'intérieur d'un tube destiné à former le liner,
• conformer les extrémités du tube à la forme extérieure des embouts en réduisant localement le diamètre du tube,
• enrouler au moins un ruban (15) de fibre imprégnée de résine thermodurcissable autour du liner pour former la couche structurelle du réservoir.

10. Méthode selon la revendication 9 comprenant en outre une étape consistant à placer des joints élastomériques (11) dans des gorges annulaires (10) de la surface radialement extérieure des embouts en regard du tube destiné à former le liner.

11. Méthode selon l'une des revendications 9 à 10 comprenant en outre une étape consistant à placer une bague de frettage (63) autour des extrémités du tube conformées sur les embouts.

12. Méthode selon l'une des revendications 9 à 11 comprenant en outre une étape consistant à enrouler un deuxième ruban de fibre imprégnée de résine thermodurcissable autour de la couche structurelle (7) pour former une couche extérieure de protection (8) du réservoir.

13. Méthode selon la revendication 12 dans laquelle le deuxième ruban de fibres est abouté au premier ruban de fibres.

14. Méthode selon l'une des revendications 9 à 13 dans laquelle les rubans sont imprégnés par passage au travers d'une ou plusieurs cascades de résine.

15. Méthode selon l'une des revendications 9 à 14 dans laquelle une pression interne est maintenue dans le volume de l'ébauche constituée du liner et des embouts pendant l'enroulement du ruban.

16. Méthode selon l'une des revendications 9 à 15 dans laquelle une traction axiale est maintenue sur l'ébauche constituée du liner et des embouts pendant l'enroulement du ruban.

17. Méthode selon l'une des revendications 9 à 16 précédentes dans laquelle on enroule simultanément deux rubans (15, 15') de manière sensiblement symétrique par rapport à l'axe (2) de l'ébauche constituée du liner et des embouts.

18. Méthode selon l'une des revendications 9 à 17 dans laquelle pour réaliser l'enroulement, on entraîne l'ébauche constituée du liner et des embouts en rotation autour de son axe (2), l'ébauche étant tenue par les embouts, les rubans étant guidés par un moyen mobile (103) parallèlement à l'axe de l'ébauche.

## Patentansprüche

1. Tank (1) zum Speichern von Fluid unter hohem Druck von allgemein zylindrischer Form und rundem Querschnitt, umfassend an jedem seiner Enden entlang seiner Achse (2) ein metallisches Endstück (3,4), eine innere Auskleidung (6), welche die Endstücke umhüllt, eine strukturelle Schicht (7) aus mit wärmeaushärtendem Harz getränkten Fasern, welche die innere Auskleidung (6) umhüllt, wobei jedes Endstück eine äußere Anschlagfläche umfasst, welche sich auf der inneren Auskleidung abstützt, wobei sich die Endstücke axial bis zum zylindrischen Teil des Tanks erstrecken, wobei der Außendurchmesser der Endstücke dem Innendurchmesser des Tanks im Wesentlichen entspricht, wobei der Tank **dadurch gekennzeichnet ist, dass** die Anschlagfläche einen nicht zylindrischen Teil umfasst, welcher in Bezug auf die Achse des Tanks ungefähr 45° geneigt ist, wobei jedes Endstück außerdem eine elastomere Dichtung (11) umfasst, welche in einer ringförmigen Nut (10) des nicht zylindrischen Teils der äußeren Fläche des genannten Endstücks (3, 4) angeordnet ist, wobei der Innendruck des Tanks die Tendenz hat, die Endstücke gegen die innere Auskleidung (6) zu pressen, wobei die Dichtung (11) komprimiert wird.

2. Tank nach Anspruch 1, bei dem die Dichtung (11) ein O-Ring ist.

3. Tank nach einem der vorhergehenden Ansprüche, wobei die strukturelle Schicht (7) eine Schicht aus Kohlefaser ist.

4. Tank nach einem der vorhergehenden Ansprüche, ferner umfassend eine äußere Schutzschicht (8) aus Glasfaser, welche die strukturelle Schicht (7) umhüllt.

5. Tank nach einem der vorhergehenden Ansprüche, bei dem die strukturelle Schicht (7) und gegebenenfalls die Schutzschicht (8), ausgehend von einem um die innere Auskleidung gewickelten Faserband (15) gebildet wird (werden).

6. Tank nach einem der vorhergehenden Ansprüche, bei dem die innere Auskleidung (6) aus Polyamid mit einer Dicke von kleiner oder gleich 3 mm, vorzugsweise kleiner als 1,5 mm, besteht.

7. Tank nach einem der vorhergehenden Ansprüche, bei dem für jedes Ende ein Ring (9), der außerhalb der strukturellen Schicht (7) liegt und fest mit dem Endstück (3, 4) verbunden ist, es axial festhält.

8. Tank nach einem der vorhergehenden Ansprüche, bei dem für jedes Ende ein Versteifungsring (63) jedes Ende der inneren Auskleidung (6) radial am Endstück festgeklemmt hält.

9. Verfahren zur Herstellung eines Tanks (1) von allgemein zylindrischer Form und rundem Querschnitt zum Speichern von Fluid unter hohem Druck, wobei der Tank um eine Achse (2) herum eine innere Auskleidung (6) und eine strukturelle Schicht (7) umfasst, wobei das Verfahren Schritte umfasst, welche nacheinander darin bestehen:
metallische Endstücke (3, 4) im Inneren eines Rohres, welches dafür vorgesehen ist, die innere Auskleidung zu bilden, anzuordnen,
die Enden des Rohres an die äußere Form der Endstücke anzupassen, indem der Duchmesser des Rohres bereichsweise reduziert wird,
mindestens ein mit wärmeaushärtendem Harz getränktes Faserband um die innere Auskleidung zu wickeln, um die strukturelle Schicht des Tanks zu bilden.

10. Verfahren nach Anspruch 9, außerdem umfassend einen Schritt, der darin besteht, elastomere Dichtungen (11) in ringförmigen Nuten (10) der radial äußeren Fläche der Endstücke anzuordnen, welche dem Rohr, das dafür vorgesehen ist, die innere Auskleidung zu bilden, gegenüberliegt.

11. Verfahren nach einem der Ansprüche 9 bis 10, außerdem umfassend einen Schritt, der darin besteht, einen Versteifungsring (63) um die Enden des Rohres herum, welche an die Endstücke angepasst sind, anzuordnen.

12. Verfahren nach einem der Ansprüche 9 bis 11, ferner umfassend einen Schritt, der darin besteht, ein zweites mit wärmeaushärtendem Harz getränktes Faserband um die strukturelle Schicht (7) herum zu wickeln, um eine äußere Schutzschicht (8) des Tanks zu bilden.

13. Verfahren nach Anspruch 12, bei dem das zweite Faserband an das erste Faserband angefügt wird.

14. Verfahren nach einem der Ansprüche 9 bis 13, bei dem die Bänder durch Durchlauf durch eine oder mehrere Harzkaskaden getränkt werden.

15. Verfahren nach einem der Ansprüche 9 bis 14, bei dem während des Umwickelns des Bandes ein innerer Druck im Volumen des Rohlings gehalten wird, welcher von der inneren Auskleidung und den Endstücken gebildet wird.

16. Verfahren nach einem der Ansprüche 9 bis 15, bei dem während des Umwickelns des Bandes eine axiale Zugkraft am Rohling gehalten wird, welcher von der inneren Auskleidung und den Endstücken gebildet wird.

17. Verfahren nach einem der vorhergehenden Ansprüche 9 bis 16, bei dem gleichzeitig zwei Bänder (15, 15') auf im Wesentlichen symmetrische Weise in Bezug auf die Achse (2) des Rohlings, der von der inneren Auskleidung und den Endstücken gebildet wird, gewickelt werden.

18. Verfahren nach einem der Ansprüche 9 bis 17, bei dem zum Ausführen des Umwickelns der Rohling, der von der inneren Auskleidung und den Endstücken gebildet wird, um seine Achse (2) in Drehung versetzt wird, wobei der Rohling von den Endstücken gehalten wird, wobei die Bänder von einem parallel zur Achse des Rohlings beweglichen Mittel (103) geführt werden.

## Claims

1. Tank (1) for storing fluid under high pressure, of cylindrical overall shape and round cross section comprising at each of its ends along its axis (2), a metal end piece (3, 4), a liner (6) enveloping the said end pieces, a structural layer (7) of fibre impregnated with thermosetting resin enveloping the said liner, each end piece comprising an external bearing surface that bears against the liner, the end pieces extending axially until the cylindrical part of the tank, said tank being **characterized in that** the said bearing surface comprises a non-cylindrical part, inclined with respect to the tank axis by roughly 45°, each end piece further comprising an elastomer seal (11) placed in an annular groove (10) of the non-cylindrical part of the exterior surface of the said end piece (3, 4), the internal pressure of the tank having a tendency to clamp the end pieces against the liner (6), compressing the seal (11).

2. Tank according to Claim 1, in which the seal (11) is an O-ring.

3. Tank according to one of the preceding claims, the structural layer (7) being a layer of carbon fibre.

4. Tank according to one of the preceding claims, further comprising an exterior protective layer (8) of glass fibre enveloping the structural layer (7).

5. Tank according to one of the preceding claims, in which the structural layer (7) and, where appropriate, the protective layer (8) consists (consist) of a tape of fibres (15) wound around the liner.

6. Tank according to one of the preceding claims, in which the liner (6) is made of polyamide with a thickness less than or equal to 3 mm, preferably less than 1.5 mm

7. Tank according to one of the preceding claims, in which, for each end, a shell ring (9) external to the structural layer (7) and secured to the end piece (3, 4) holds it axially in place.

8. Tank according to one of the preceding claims, in which, for each end, hooping (63) keeps each end of the liner (6) radially clamped against the end piece.

9. Method of manufacturing a tank (1) of cylindrical overall shape of round cross section for the storage of high-pressure fluid, the tank comprising, about an axis (2), a liner (6) and a structural layer (7), the said method comprising steps successively involving:
• placing metal end pieces (3, 4) inside a tube intended to form the liner,
• shaping the ends of the tube to the exterior shape of the end pieces by locally reducing the diameter of the tube,
• winding at least one tape (15) of fibre impregnated with thermosetting resin around the liner to form the structural layer of the tank.

10. Method according to Claim 9 further comprising a step that involves placing elastomer seals (11) in annular grooves (10) of the radially exterior surface of the end pieces facing the tube intended to form the liner.

11. Method according to one of Claims 9 to 10 further comprising a step involving placing hooping (63) around the ends of the tube which are formed over the end pieces.

12. Method according to one of Claims 9 to 11 further comprising a step that consists in winding a second tape of fibre impregnated with thermosetting resin around the structural layer (7) to form a protective outer layer (8) of the tank.

13. Method according to Claim 12 in which the second tape of fibres is married up with the first tape of fibres.

14. Method according to one of Claims 9 to 13, in which the tapes are impregnated by passing through one or more resin cascades.

15. Method according to one of Claims 9 to 14, in which an internal pressure is maintained in the volume of the preform consisting of the liner and of the end pieces while the tape is being wound.

16. Method according to one of Claims 9 to 15 in which axial traction is maintained on the preform consisting of the liner and of the end pieces while the tape is being wound.

17. Method according to one of the preceding claims 9 to 16, in which two tapes (15, 15') are simultaneously wound substantially symmetrically with respect to the axis (2) of the preform consisting of the liner and of the end pieces.

18. Method according to one of Claims 9 to 17, in which, in order to perform the winding, the preform consisting of the liner and of the end pieces is rotated about its axis (2), the preform being held by the end pieces, the tapes being guided by a mobile means (103) able to move parallel to the axis of the preform.
